# EUROPÄISCHE PATENTSCHRIFT

(11) **EP 4 114 698 B1**
(45) Veröffentlichungstag und Bekanntmachung des Hinweises auf die Patenterteilung: **31.01.2024**
(21) Anmeldenummer: 21710444.7
(22) Anmeldetag: 05.03.2021
(51) Int. Cl.: B60T 15/02, B60T 15/20

(54) **FLUIDVENTIL, VENTILANORDNUNG UND BREMSANLAGE**
FLUID VALVE, VALVE ARRANGEMENT AND BRAKE SYSTEM
VALVE POUR FLUIDES, AGÉNCEMENT DE VALVE ET SYSTÈM DE FREINAGE

(30) Priorität: 06.03.2020 DE 102020106212
(43) Veröffentlichungstag der Anmeldung: 11.01.2023
(73) Patentinhaber: ZF CV Systems Europe BV, 1170 Brüssel (BE)
(72) Erfinder: GERLACH, Steffen, 30169 Hannover (DE); LÜCHAU, Karsten-Wilhelm, 29331 Lachendorf (DE); SIEKER, Armin, 33611 Bielefeld (DE)
(74) Vertreter: Ohlendorf, Henrike
(86) Internationale Anmeldenummer: PCT/EP2021/055562
(87) Internationale Veröffentlichungsnummer: WO 2021/176040

(56) Entgegenhaltungen:
- EP-A1- 3 477 168
- EP-A1- 3 481 687
- DE-A1- 2 821 921
- DE-U1-202011 102 934
- US-A- 3 952 766

## Beschreibung

Die Erfindung betrifft ein Fluidventil gemäß dem Oberbegriff des Anspruchs 1. Daneben betrifft die Erfindung eine pneumatische Ventilanordnung und eine pneumatische Bremsanlage für ein Fahrzeug, insbesondere für ein Anhängefahrzeug.

Als Fluidventile werden hier Ventile für alle strömenden Medien verstanden, insbesondere Pneumatikventile, vorzugsweise zur Verwendung in pneumatischen Bremsanlagen. Pneumatische Bremsanlagen in Anhängefahrzeugen mit Parklöseventil können verschiedene Sicherheitsfunktionen erfüllen. Beispielsweise kann eine sogenannte Park/Save-Funktion vorgesehen sein, die eine gefährliche Situation in Verbindung mit einer Fehlbedienung vermeiden soll. Beim Ankoppeln eines Anhängefahrzeugs an ein Zugfahrzeug soll das Parklöseventil in Parkstellung stehen. Selbst wenn sich das Parklöseventil aber in seiner Fahrtstellung befindet, ist das noch nicht angekoppelte Anhängefahrzeug gebremst, da vorhandene Federspeicherbremsen dann entlüftet und wirksam sind. Wird in dieser Situation mit dem Parklöseventil in der Fahrtstellung nun irrtümlich zunächst die Vorratsdruckleitung des Anhängefahrzeugs mit dem Zugfahrzeug verbunden, werden, wenn die Bremsanlage des Anhängefahrzeugs keine Park/Save-Funktion aufweist, die Federspeicherbremsen belüftet und gelöst. Das Anhängefahrzeug kann sich bewegen, obwohl dies zu diesem Zeitpunkt nicht gewünscht ist und Gefahr für Bedienungspersonen besteht. Die Park/Save-Funktion bewirkt demgegenüber, dass die Federspeicherbremsen unter diesen Bedingungen noch nicht belüftet und gelöst werden. Vielmehr muss wenigstens einmal die Betriebsbremse betätigt werden. Der dabei eingesteuerte Bremsdruck wirkt als Steuerdruck für die Aufhebung der Park/Save-Funktion. Die Park/Save-Funktion und eine mögliche konstruktive Lösung sind dargestellt in der DE 10 2016 005 625 A1, insbesondere im Zusammenhang mit den Fig. 6 bis 11.

Die Park/Save-Funktion kann in ein sogenanntes Parklöseventil integriert oder Bestandteil einer Ventilanordnung sein, mit der eine Parklöse-Funktion realisiert ist. Die Fig. 7 der DE 10 2016 005 625 A1 zeigt hierzu ein pneumatisches Schaltbild, die Fig. 8 bis 11 ein hoch integriertes Parklöseventil, passend zum pneumatischen Schaltbild. Die Park/Save-Funktion ergibt sich aus dem Zusammenwirken eines Steuerschiebers 105 mit einem Sperrschieber 104 und zugehörigen Dichtungen und Strömungskanälen.

Durch geringere Integration ist ein einfacherer Aufbau der einzelnen Bestandteile möglich. Das Parklöseventil kann als einfaches Schieberventil ausgeführt werden, während die Park/Save-Funktion durch ein eigens hierfür vorgesehenes Ventil realisierbar ist.

EP 3 477 168 A1 offenbart ein Ventil mit einem Druckeingang und einem Druckausgang sowie mit einem Schaltelement, das entlang einer Achse zwischen einem ersten Anschlag und einem zweiten Anschlag bewegbar ist. Weiterhin weist das Ventil eine Membran auf, die als Rückschlagelement wirkt. Das Ventil weist eine Durchlasstellung auf, in der das Schaltelement an dem ersten Anschlag anliegt. Das Ventil weist weiterhin eine Sperrstellung auf, in der das Schaltelement an dem zweiten Anschlag anliegt. Das Schaltelement kann in der Sperrstellung an der Membran anliegen: Ist ein Druck am Druckausgang höher als ein Druck am Druckeingang, wird die Membran gegen das Schaltelement gepresst; ist der Druck am Druckeingang dagegen höher als der Druck am Druckausgang, hebt die Membran von dem Schaltelement ab (Rückschlagfunktion).

Aufgabe der vorliegenden Erfindung ist die Schaffung eines Fluidventils, welches als Parksicherheitsventil bzw. zur Realisierung der Park/Save-Funktion geeignet ist. Insbesondere soll das Fluidventil möglichst zuverlässig, leichtgängig und wartungsfrei sein.

Zur Lösung der Aufgabe weist das erfindungsgemäße Fluidventil die Merkmale des Anspruchs 1 auf. Danach ist das Fluidventil zwischen einem Druckeingang und einem Druckausgang mit einer eine Dichtlippe aufweisenden Lippendichtung versehen, wobei eine Position der Dichtlippe zur Veränderung eines Durchlassquerschnitts veränderbar ist. Erfindungsgemäß kann die Dichtlippe unterschiedliche Positionen einnehmen, sodass ein Durchlassquerschnitt zwischen Druckeingang und Druckausgang einstellbar ist. Vorzugsweise wird die Dichtlippe nicht insgesamt bewegt. Vielmehr wird nur ein Teil der Dichtlippe relativ zur Lippendichtung abgewinkelt oder verbogen. Die Dichtlippe kann hierzu aus entsprechend elastischem Werkstoff hergestellt sein, ebenso die Lippendichtung insgesamt.

Das Fluidventil ist insbesondere für pneumatische Bremsanlagen in Anhängefahrzeugen vorgesehen, kann aber auch für andere Anwendungen im Zusammenhang mit strömenden Medien eingesetzt werden. Im Gegensatz zu herkömmlichen Schieberventilen oder Sitzventilen sind die Reibungskräfte in dem dargestellten Fluidventil mit schaltbarer Lippendichtung relativ gering.

Nach einem weiteren Gedanken der Erfindung ist vorgesehen, dass die Dichtlippe in einer Sperrstellung an einer Dichtfläche anliegt und in einer Durchlassstellung einen Abstand zur Dichtfläche aufweist. Durch den Abstand und gegebene geometrische Verhältnisse wird der Durchlassquerschnitt definiert.

Nach einem weiteren Gedanken der Erfindung kann vorgesehen sein, dass die Dichtlippe eine Eigenspannung aufweist, welche die Dichtlippe zur Verringerung des Durchlassquerschnitts beaufschlagt. Das heißt, ohne Beeinflussung durch andere Bauelemente ist die Dichtlippe bestrebt, die Position mit dem geringsten Durchlassquerschnitt einzunehmen. Insbesondere liegt die Dichtlippe dann an einer Dichtfläche an. Vorteilhafterweise erstreckt sich die Dichtlippe unter einem spitzen Winkel zur Dichtfläche und ist selbsthaltend angeordnet, das heißt, bei größerem Druck am Druckeingang als am Druckausgang wird die Dichtlippe durch die Druckdifferenz gegen die Dichtfläche gedrückt und hält so die oben genannte Sperrstellung.

Die Position der Dichtlippe ist durch Druck eines Schaltelements veränderbar. Mit dem Schaltelement wird mittelbar der Durchlassquerschnitt verändert. Dabei wirkt der Druck des Schaltelements vorzugsweise der Eigenspannung der Dichtlippe entgegen. Das Schaltelement wird zur Veränderung der Position der Dichtlippe verwendet und kann selbst beispielsweise durch ein Fluid angesteuert werden. Durch Bewegung des Schaltelements kann der Druck des Schaltelements ausgeübt werden und ist die Dichtlippe schaltbar, sodass wahlweise die Verbindung vom Druckeingang zum Druckausgang geöffnet und geschlossen oder einfach nur der Durchlassquerschnitt verändert werden kann. Durch Veränderung des Durchlassquerschnitts ist die Dichtlippe somit stufenlos schaltbar. Die Beaufschlagung der Dichtlippe durch das Schaltelement kann mittelbar oder unmittelbar erfolgen. Beispielsweise kann zwischen Schaltelement und Dichtlippe ein zusätzliches Bauteil vorgesehen sein. Das Schaltelement wirkt dann nur mittelbar auf die Dichtlippe.

Nach einem weiteren Gedanken der Erfindung kann vorgesehen sein, dass sich die Dichtlippe in einer Sperrstellung am Schaltelement abstützt. Die Dichtlippe liegt dann in Sperrstellung einerseits an der Dichtfläche an und wird andererseits vom Schaltelement abgestützt, vorzugsweise von einem Rand oder Kragen des Schaltelements.

Nach einem weiteren Gedanken der Erfindung kann das Schaltelement an der Dichtlippe anliegen, wobei die Dichtlippe durch das Schaltelement zur Vergrößerung des Durchlassquerschnitts beaufschlagbar ist. Insbesondere beaufschlagt das Schaltelement die Dichtlippe in einer Durchlassstellung stärker als in der Sperrstellung.

Nach einem weiteren Gedanken der Erfindung kann die Lippendichtung einen Lippenhalter aufweisen, an dem die Dichtlippe gehalten ist. Ein Winkel der Dichtlippe zum Lippenhalter kann durch mechanischen Druck des Schaltelements änderbar sein. Die Änderung des Winkels kann sich auch durch Verformung der Dichtlippe ergeben.

Nach einem weiteren Gedanken der Erfindung kann das Schaltelement pilzförmig mit Stamm und Dach ausgebildet sein. Der Lippenhalter kann becherförmig mit einer Becheröffnung und einem Boden ausgebildet sein, wobei der Boden eine Bodenöffnung aufweist. Der Stamm kann in die Becheröffnung hineinreichen bis in die Bodenöffnung. Das Dach kann dann in der Durchlassstellung an der Lippendichtung anliegen. Die Lippendichtung oder das Dach können mit einer Dichtwulst versehen sein. Das Dach dichtet auf diese Weise in der Durchlassstellung der Lippendichtung die Becheröffnung ab.

Nach einem weiteren Gedanken der Erfindung kann das Dach einen umlaufenden Kragen aufweisen, welcher zum Boden des Lippenhalters geneigt ist, wobei sich die Dichtlippe von einem Rand neben der Becheröffnung umlaufend nach außen erstreckt, und wobei die Dichtlippe in Durchlassstellung vom Kragen des Daches beaufschlagt wird. Vorzugsweise beaufschlagt der Kragen die Dichtlippe während der gesamten Betätigung der Dichtlippe, insbesondere auch in der Sperrstellung.

Nach einem weiteren Gedanken der Erfindung kann das Schaltelement in Richtung auf eine Entlastung der Dichtlippe durch eine Rückstellfeder beaufschlagt sein. Die Rückstellfeder wirkt gegen das Schaltelement und muss durch Druck am Steueranschluss oder Druckausgang zusätzlich überwunden werden, ebenso wie die Eigenspannung der Dichtlippe.

Das Fluidventil kann ein Gehäuse aufweisen.

Nach einem weiteren Gedanken der Erfindung kann vorgesehen sein, dass das Schaltelement in dem Gehäuse gegen die Wirkung der Rückstellfeder bewegbar ist, und dass eine Verbreiterung des Schaltelements bei minimiertem Durchlassquerschnitt durch die Wirkung der Rückstellfeder an einem Absatz des Gehäuses anliegt. Rückstellfeder, Verbreiterung und Absatz definieren eine Endposition des im Gehäuse des Fluidventils bewegbaren Schaltelements.

Nach einem weiteren Gedanken der Erfindung kann der Lippenhalter in dem Gehäuse fest stehend angeordnet sein. Der Lippenhalter ist dann ebenso wie die Dichtlippe Teil der Lippendichtung. Der Lippenhalter ist feststehend vorgesehen, während die Dichtlippe bewegbar oder flexibel ist. Bei der Veränderung des Durchlassquerschnitts ändert die Dichtlippe ihre Form, ihre Position und/oder ihren Winkel relativ zum Lippenhalter.

Nach einem weiteren Gedanken der Erfindung kann das Gehäuse einen zylindrischen Innenraum aufweisen. In dem Innenraum kann das Schaltelement in Axialrichtung bewegbar sein. In dem Innenraum kann außerdem die Lippendichtung gehalten sein. Schaltelement und Lippendichtung sind vorzugsweise an die zylindrische Gestalt des Innenraums angepasst.

Nach einem weiteren Gedanken der Erfindung kann die Dichtlippe bei geschlossenem Durchlassquerschnitt den Innenraum aufteilen in ein mit dem Druckausgang verbundenes Ausgangsvolumen und ein mit dem Druckeingang verbundenes Eingangsvolumen. Bei nicht geschlossenem Durchlassquerschnitt sind Ausgangsvolumen und Eingangsvolumen über den Durchlassquerschnitt miteinander verbunden.

Nach einem weiteren Gedanken der Erfindung kann zwischen Lippendichtung und Schaltelement ein mit einem Entlastungsausgang verbundenes Entlastungsvolumen gebildet sein, wobei das Entlastungsvolumen und das Ausgangsvolumen über einen Strömungskanal im Schaltelement zumindest in einer Sperrstellung der Dichtlippe miteinander verbunden sind. Dadurch liegt in Sperrstellung im Ausgangsvolumen ein definierter Druck vor, nämlich wie im Entlastungsvolumen, welches mit dem Entlastungsausgang verbunden ist. Der Druck am Entlastungsausgang entspricht typischerweise einem Umgebungsdruck des Fluidventils.

Nach einem weiteren Gedanken der Erfindung kann eine Verbindung vom Entlastungsvolumen zum Strömungskanal in Durchlassstellung der Dichtlippe verschlossen sein durch eine Dichtung zwischen Lippendichtung und Schaltelement. Durch die Dichtung wird das Entlastungsvolumen vom Strömungskanal und dem damit verbundenen Ausgangsvolumen getrennt. Auf diese Weise ist der Strömungskanal in Durchlassstellung sicher verschlossen.

Nach einem weiteren Gedanken der Erfindung kann in einem Gehäuse des Fluidventils ein zwischen einer Ausgangsstellung und einer Betätigungsstellung bewegbarer Steuerkolben vorhanden sein, welcher durch Druck an einem Steueranschluss aus seiner Ausgangsstellung bewegbar ist und in der Betätigungsstellung ein Schaltelement zur Betätigung der Dichtlippe beaufschlagt. Mit der Bewegung des Steuerkolbens in die Betätigungsstellung geht die Dichtlippe in Durchlassstellung.

Nach einem weiteren Gedanken der Erfindung kann der Steuerkolben ein mit dem Steueranschluss verbundenes Steuervolumen von einem mit dem Druckausgang verbundenen Ausgangsvolumen trennen. Vorzugsweise ist der Steuerkolben hierzu mit einer umlaufenden Dichtung versehen. Durch ansteigenden Druck im Steuervolumen ist der Steuerkolben zur Verringerung des Ausgangsvolumens bewegbar.

Nach einem weiteren Gedanken der Erfindung können wenigstens zwei Schaltstellungen vorgesehen sein, nämlich die Sperrstellung und die Durchlassstellung. Weiterhin können wenigstens vier Anschlüsse vorgesehen sein, nämlich der Druckeingang, der Druckausgang, ein Entlastungsausgang und ein Steueranschluss. Weiterhin kann in dem Gehäuse ein Schaltelement bewegbar sein. Das bewegbare Schaltelement kann dazu vorgesehen sein, den Durchlassquerschnitt vom Druckeingang zum Druckausgang in Abhängigkeit vom Druck am Druckausgang und am Steueranschluss wahlweise zu öffnen oder zu schließen. Das Schaltelement kann eine Haltefunktion aufweisen, wobei die Haltefunktion so ausgestaltet ist, dass der Durchlassquerschnitt geöffnet ist, wenn der Druck am Steueranschluss oberhalb eines ersten Grenzwerts liegt, und auch dann geöffnet bleibt, wenn der Druck am Steueranschluss wieder unter den ersten Grenzwert fällt, dabei aber am Druckausgang ein Druck oberhalb eines zweiten Grenzwerts anliegt. Durch die vorgesehene Haltefunktion können mit dem Fluidventil besondere Funktionen erfüllt werden, beispielsweise als Parksicherheitsventil in einer pneumatischen Bremsanlage. Die genannten Grenzwerte liegen vorzugsweise zwischen 1 und 3,5 bar, insbesondere zwischen 2 und 3 bar. Der erste und der zweite Grenzwert können identisch sein, können sich aber auch unterscheiden.

Eine pneumatische Ventilanordnung mit einem Parklöseventil weist zur Lösung der Aufgabe ein Fluidventil nach einem der Ansprüche 1 bis 18 auf. Das Fluidventil hat dabei vorzugsweise die Aufgabe eines Parksicherheitsventils. Die Ventilanordnung ist vorzugsweise für eine Bremsanlage eines Fahrzeugs, insbesondere für eine Bremsanlage eines Anhängefahrzeugs, vorgesehen.

Nach einem weiteren Gedanken der Erfindung kann der Druckeingang des Fluidventils mit einem unter Vorratsdruck stehenden Versorgungsanschluss der Ventilanordnung verbunden sein, wobei der Druckausgang des Fluidventils mit einem Anschluss des Parklöseventils verbunden ist und ein Steueranschluss des Fluidventils mit einem Steueranschluss der Ventilanordnung verbunden ist. Der Steueranschluss der Ventilanordnung ist vorzugsweise mit Bremsdruck aus der pneumatischen Bremsanlage beaufschlagbar. Der Versorgungsanschluss der Ventilanordnung erhält in einem Anhängefahrzeug den Vorratsdruck von einem Kupplungskopf "Vorrat", während der Bremsdruck über einen Kupplungskopf "Bremse" zugeführt wird.

Gegenstand der Erfindung ist auch eine pneumatische Bremsanlage für ein Anhängefahrzeug, mit einem Fluidventil nach einem der Ansprüche 1 bis 19 oder mit einer Ventilanordnung nach einem der Ansprüche 20 und 21.

Weitere Merkmale der Erfindung ergeben sich aus der Beschreibung im Übrigen und aus den Patentansprüchen. Vorteilhafte Ausführungsbeispiele der Erfindung werden nachfolgend anhand von Zeichnungen näher erläutert. Es zeigen:
- Fig. 1: einen Axialschnitt durch ein Fluidventil in einer ersten Schaltstellung, nämlich in einer Sperrstellung,
- Fig. 2: einen der Fig. 1 entsprechende Axialschnitt in einer zweiten Schaltstellung, nämlich in einer Durchlassstellung,
- Fig. 3: einen der Fig. 1 entsprechenden Axialschnitt in einer dritten Schaltstellung, nämlich in einer selbsthaltenden Durchlassstellung,
- Fig. 4: ein pneumatisches Schaltbild einer Ventilanordnung mit einem Parklöseventil, einem Parksicherheitsventil, einem schaltbaren Rückschlagventil und einem Notbremsventil,
- Fig. 5: ein gegenüber Fig. 4 abgewandeltes pneumatisches Schaltbild mit der Ventilanordnung in derselben ersten Schaltstellung,
- Fig. 6: ein der Fig. 5 entsprechendes pneumatisches Schaltbild mit der Ventilanordnung in einer zweiten Schaltstellung,
- Fig. 7: ein der Fig. 5 entsprechendes pneumatisches Schaltbild mit der Ventilanordnung in einer dritten Schaltstellung,
- Fig. 8: einen Axialschnitt durch ein Parksicherheitsventil in der ersten Schaltstellung gemäß Fig. 5,
- Fig. 9: einen der Fig. 8 entsprechenden Axialschnitt mit dem Parksicherheitsventil in der zweiten Schaltstellung gemäß Fig. 6,
- Fig. 10: einen der Fig. 8 entsprechenden Axialschnitt mit dem Parksicherheitsventil in der dritten Schaltstellung gemäß Fig. 7.

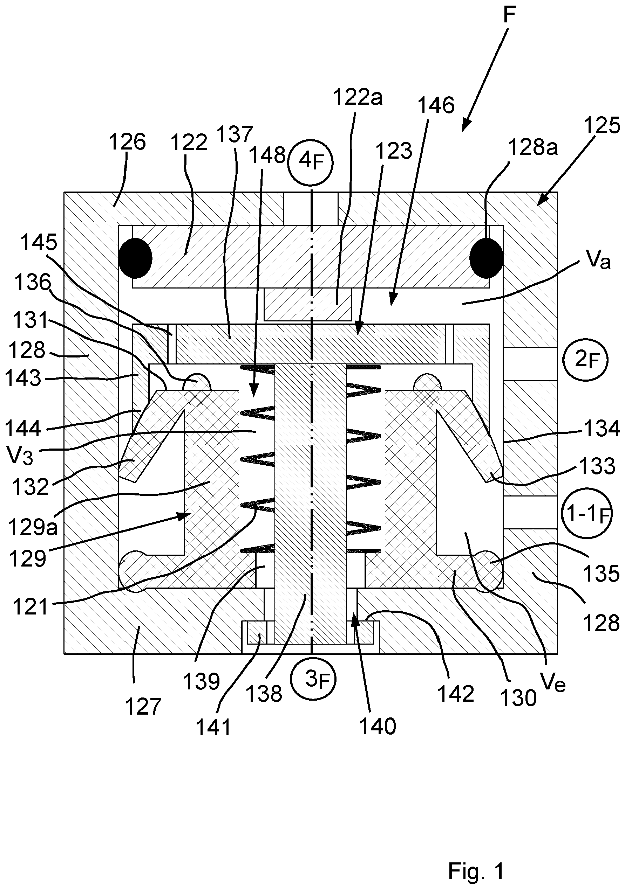

Ein in den Fig. 1 bis 3 dargestelltes Fluidventil F ist vorzugsweise ein 3/2-WegeVentil, kann für hydraulische oder pneumatische oder gemischte Anwendungen vorgesehen sein und weist mindestens zwei Schaltstellungen und mindestens drei Anschlüsse für Eingänge und Ausgänge auf. Zusätzlich ist hier wenigstens ein Steueranschluss vorgesehen. Die Anschlüsse bzw. Eingänge/Ausgänge sind mit einer in der Fluidtechnik üblichen Bezifferung und zusätzlich mit einem Index F versehen:
- 1-1_{F}: Druckeingang
- 2_{F}: Druckausgang
- 3_{F}: Entlastungsausgang
- 4_{F}: Steueranschluss

Zur Verdeutlichung und zur Unterscheidung von weiteren Bezugsziffern sind die zuvor genannten Ziffern in den Figuren jeweils mit einem Umkreis versehen.

Details des Fluidventils F werden anhand der in den Figuren dargestellten Ausrichtung erläutert. Dabei verwendete Richtungsangaben, wie "oben", "unten", "seitlich", oder Begriffe mit Richtungsangaben beziehen sich auf die Darstellung in den Figuren. Eine demgegenüber verdrehte Anordnung des Fluidventils F ist möglich. Die Richtungsangaben sind dann entsprechend anzupassen.

Das Fluidventil F weist ein zylindrisches Gehäuse 125 mit Oberwand 126, Bodenwand 127 und umlaufender Seitenwand 128 auf. Der Steueranschluss 4_{F} ist im Bereich der Oberwand 126 vorgesehen. Im Gehäuse 125 ist unterhalb der Oberwand 126 ein Steuerkolben 122 axial bewegbar und mit einer umlaufenden Dichtung 128a versehen.

Auf der Bodenwand 127 ist eine Lippendichtung 129 angeordnet, welche einen becherförmigen Lippenhalter 129a mit einer Becheröffnung 148 und mit einem bodenseitigen, radial gerichteten Bodenkragen 130 aufweist. Von einem oberen Rand 131 des becherförmigen Lippenhalters 129a erstreckt sich nach außen eine kragenartige Dichtlippe 132. Die Dichtlippe 132 ist schräg abwärts gerichtet und liegt in der in Fig. 1 gezeigten ersten Schaltstellung/Sperrstellung mit einem unteren Dichtrand 133 an einer Dichtfläche 134 des Gehäuses 125 an. Die Dichtfläche 134 ist hier innen an der Seitenwand 128 vorgesehen.

Das Gehäuse 125 weist seitlich den Druckeingang 1-1_{F} und axial darüber den Druckausgang 2_{F} auf. Die Dichtfläche 134 liegt zwischen dem Druckeingang 1-1_{F} und dem Druckausgang 2_{F}.

Der Bodenkragen 130 ist radial außen zusätzlich mit einer Dichtwulst 135 versehen, die innen an der Seitenwand 128 und/oder an der Bodenwand 127 anliegt. Auf dem oberen Rand 131 ist eine umlaufende Dichtwulst 136 vorgesehen.

Zwischen dem Steuerkolben 122 und der Lippendichtung 129 ist ein hier T-förmig ausgebildetes Schaltelement 123 angeordnet, welches ein Dach 137 mit darunter stehendem Stamm 138 aufweist. Der Stamm 138 erstreckt sich von oben in die Becheröffnung 148 hinein und durch eine Bodenöffnung 139 des Lippenhalters 129a hindurch. Zugleich erstreckt sich der Stamm 138 durch eine bodenseitige Öffnung 140 des Gehäuses 125 hindurch. Dabei ist der Stamm 138 mit einer unteren Verbreiterung 141 in der einen Absatz 142 aufweisenden Öffnung 140 gehalten. Die Bodenöffnung 139 und die Öffnung 140 des Gehäuses 125 sind koaxial angeordnet.

Eine Rückstellfeder 121 sitzt auf dem Stamm 138, drückt das Dach 137 mit dem Stamm 138 nach oben und stützt sich dabei in dem becherförmigen Lippenhalter 129a ab, sodass die Verbreiterung 141 von unten am Absatz 142 anliegt, siehe die erste Schaltstellung/Sperrstellung in Fig. 1. Dabei verschließt die Verbreiterung 141 die Öffnung 140 nicht vollständig, sodass ein Druckausgleich über die Öffnung 140 und den daran anschließenden Entlastungsausgang 3_{F} möglich bleibt.

Das Dach 137 des Schaltelements 123 ist radial außen mit einem abwärts gerichteten Kragen 143 versehen, dessen unterer Rand 144 die Dichtlippe 132 außen abstützt oder ohne Druck an dieser anliegt. Die Dichtwulst 136 weist in Fig. 1 einen Abstand zum Dach 137 auf. Im Dach 137 befinden sich Strömungskanäle 145, sodass ein Raum zwischen Dichtwulst 136 und Kragen 143 belüftbar ist.

Ein Innenraum 146 des Gehäuses 125 ist zumindest unterteilt in ein mit dem Druckeingang 1-1_{F} verbundenes Eingangsvolumen Vₑ, ein mit dem Druckausgang 2_{F} verbundenes Ausgangsvolumen Vₐ, ein insbesondere über die Bodenöffnung 139 und die Öffnung 140 mit dem Entlastungsausgang 3_{F} verbundenes Entlastungsvolumen V₃ und ein mit dem Steueranschluss 4_{F} verbundenes Steuervolumen V_{S}.

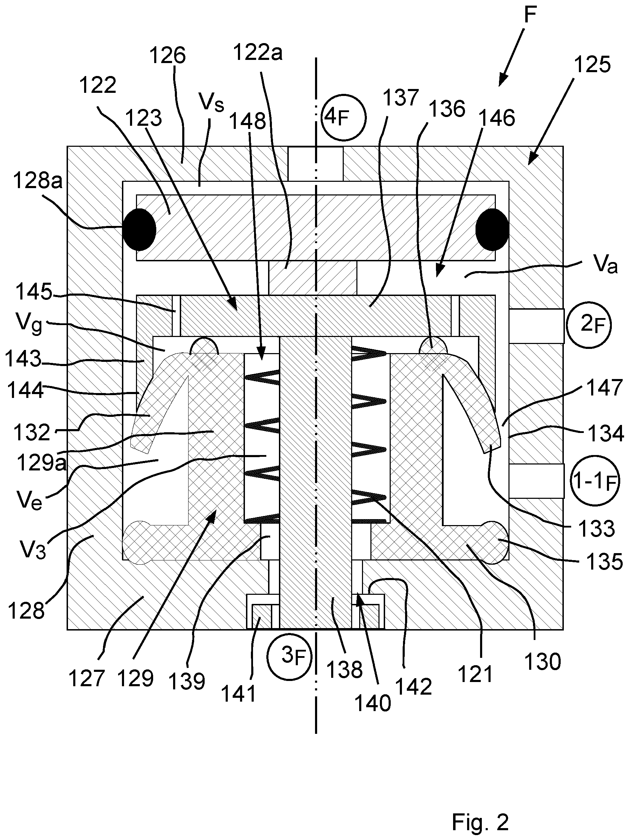

Fig. 2 zeigt das Fluidventil F in einer zweiten Schaltstellung, die zugleich eine erzwungene Durchlassstellung ist. Über den Steueranschluss 4_{F} wirkt Steuerdruck im Steuervolumen V_{S} und auf den Steuerkolben 122, sodass der Steuerkolben 122 mit einem unteren Fortsatz 122a, welcher in Radialrichtung schmaler ist als der Steuerkolben 122, das Schaltelement 123 durch Druck auf das Dach 137 beaufschlagt und abwärts drückt, gegen den Widerstand der Rückstellfeder 121. Dabei drückt der Kragen 143 die Dichtlippe 132 abwärts in die gezeigte Durchlassstellung. Der untere Dichtrand 133 hat sich von der Dichtfläche 134 gelöst und es ist ein Durchlass 147 vom Druckeingang 1-1_{F} zum Druckausgang 2_{F} entstanden, sodass ein Druckausgleich stattfindet. Zugleich kommt das Dach 137 zur Anlage an der Dichtwulst 136. Ein Druckausgleich innerhalb eines dadurch gebildeten gefangenen Volumens V_{g} zwischen der Dichtwulst 136, dem Kragen 143 und der Dichtlippe 132 radial außerhalb der Dichtwulst 136 ist möglich durch die Strömungskanäle 145.

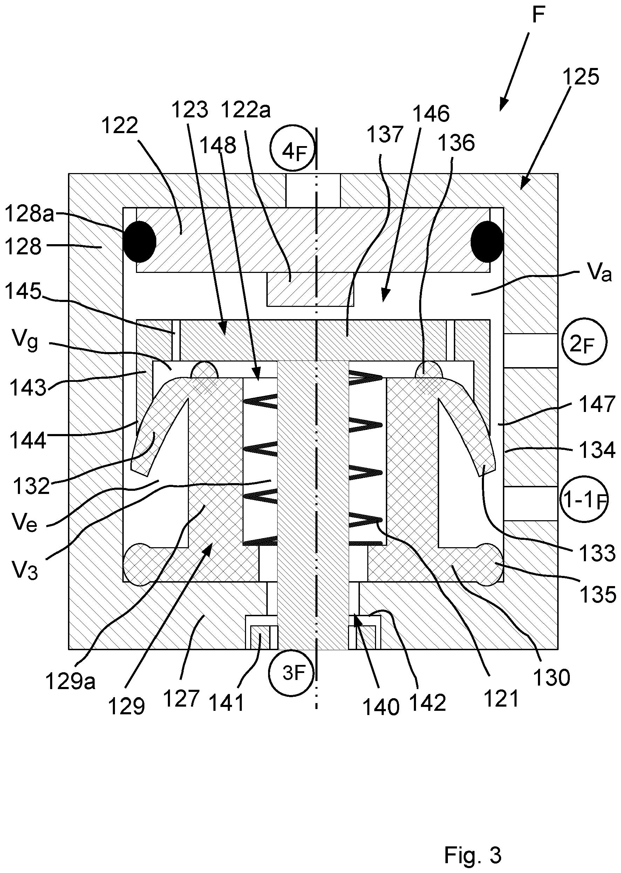

Ausgehend von der zweiten Schaltstellung in Fig. 2 wird anschließend über den Steueranschluss 4_{F} kein Steuerdruck mehr zugeführt. Es kommt zu der in Fig. 3 gezeigten dritten Schaltstellung. Auch dabei handelt es sich um eine Durchlassstellung, jedoch ohne Beaufschlagung des Schaltelements 123 durch den Steuerkolben 122. Durch den im Ausgangsvolumen Vₐ vorherrschenden Druck wirkt auch eine Kraft auf das Schaltelement 123 in Abwärtsrichtung, sodass die Dichtlippe 132 in Durchlassstellung bleibt und der Durchlass 147 offen gehalten wird. Außerdem wird der Steuerkolben 122 aufwärts gedrückt in Richtung auf den Steueranschluss 4_{F} und in die Position wie in den Fig. 1 und 3 dargestellt, also bis zur Anlage an der Oberwand 126.

Zusammengefasst sind folgende Zustände in den Fig. 1 bis 3 gezeigt:
- in Fig. 1: die Sperrstellung von Dichtlippe 132 und Schaltelement 123 und eine Ausgangsstellung des Steuerkolbens 122, ohne Druck am Steueranschluss 4_{F},
- in Fig. 2: die erzwungene Durchlassstellung von Dichtlippe 132 und Schaltelement 123 und eine Betätigungsstellung des Steuerkolbens 122 bei Druck am Steueranschluss 4_{F} oberhalb eines ersten Grenzwerts,
- in Fig. 3: die selbsthaltende Durchlassstellung von Dichtlippe 132 und Schaltelement 123 und die Ausgangsstellung des Steuerkolbens 122 nach Druckrückgang am Steueranschluss 4_{F}, bei Druck im Ausgangsvolumen Vₐ oberhalb eines zweiten Grenzwerts.

Der erste Grenzwert für den Druck am Steueranschluss 4_{F} und der zweite Grenzwert für den Druck im Ausgangsvolumen Vₐ liegen vorzugsweise zwischen 1 und 3,5 bar, insbesondere zwischen 2 und 3 bar. Die Kraft der Rückstellfeder 121 und die beiden genannten Grenzwerte sind aufeinander abgestimmt.

Anders als in Fig. 1 dargestellt, muss die Dichtlippe 132 nicht zwingend eine Sperrstellung einnehmen. Möglich ist auch eine Bewegung der Dichtlippe 132 durch das Schaltelement 123 lediglich zur Erzielung unterschiedlich großer Durchlässe 147 und/oder zur stufenlosen Verstellung des Durchlasses 147. Es ergeben sich dann zumindest eine Durchlassstellung mit kleinem Durchlass und eine Durchlassstellung mit demgegenüber größerem Durchlass.

Ebenfalls abweichend von der Darstellung in den Figuren muss das Fluidventil F nicht zwingend den Steuerkolben 122 und den Steueranschluss 4_{F} aufweisen. Stattdessen kann auch eine andere Art der Steuerung oder Beaufschlagung des Schaltelements 123 vorhanden sein, etwa eine elektromagnetische Betätigung wie bei einem Magnetventil oder ein mechanischer Taster. Wichtig sind Lippendichtung 129, Schaltelement 123, Druckeingang 1-1_{F}, Druckausgang 2_{F}, Entlastungsausgang 3_{F} und vorzugsweise die Rückstellfeder 121 oder ein anderes Rückstellelement und irgendeine Art der Betätigung des Schaltelements 123.

Das Fluidventil F kann für alle Anwendungen im Zusammenhang mit strömenden Medien eingesetzt werden. Im Gegensatz zu herkömmlichen Schieberventilen oder Sitzventilen sind die Reibungskräfte in dem dargestellten Fluidventil mit schaltbarer Lippendichtung relativ gering.

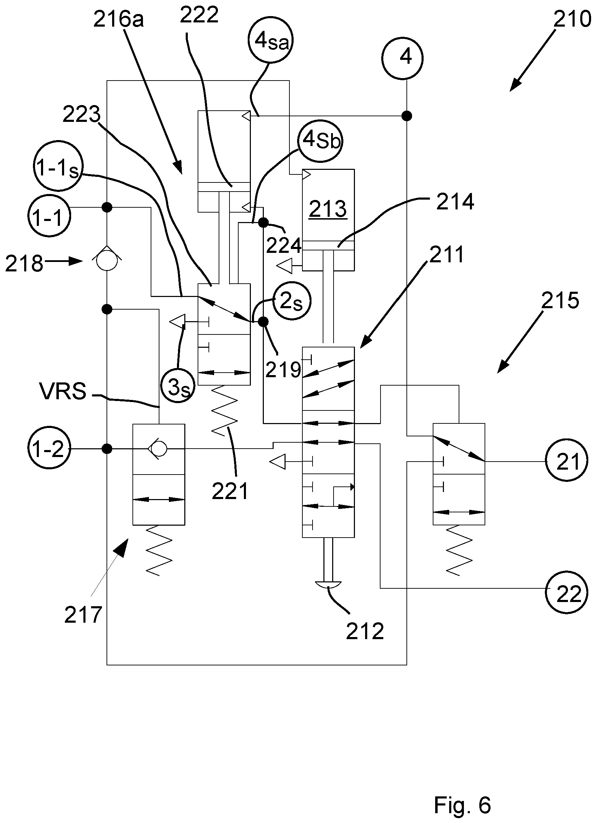

Das dargestellte Fluidventil kann beispielsweise Einsatz finden in einem pneumatischen Bremssystem für ein Anhängefahrzeug, wie es beispielsweise in der DE 10 2016 005 625 A1, Fig. 6, dargestellt ist. Rechts unten in der Figur ist eine Ventilanordnung mit der Funktion eines Parklöseventils dargestellt, siehe dort Bezugsziffer 23. Bestandteil der Ventilanordnung ist auch ein Parksicherheitsventil, siehe dort oberhalb des Bauteils mit der Bezugsziffer 109. Als externes Bauteil, also außerhalb der Ventilanordnung ist ein Notbremsventil vorgesehen, siehe dort Bezugsziffer 37.

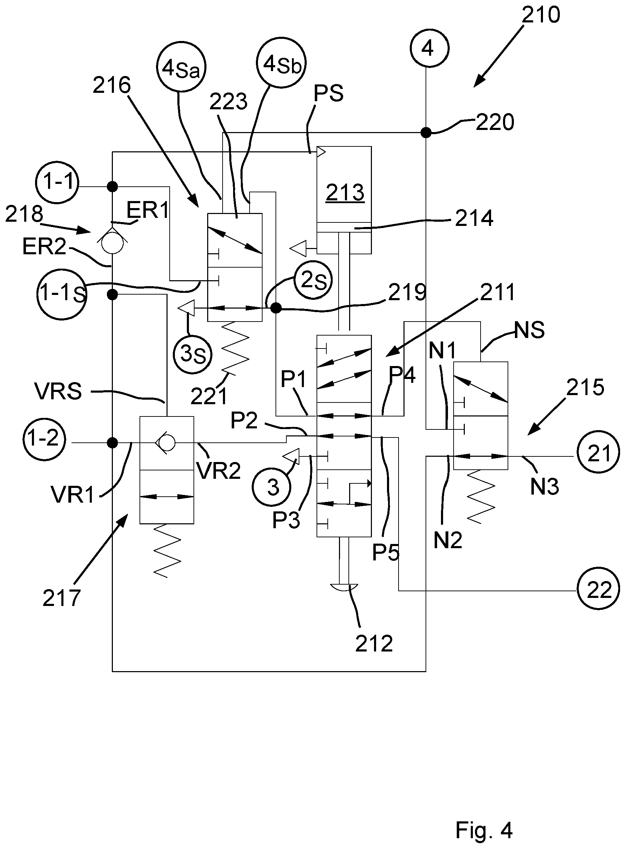

Ohne dass dadurch eine Beschränkung der Erfindung bewirkt werden soll, ist ein erfindungsgemäßes Fluidventil in den Figuren 4 bis 10 beispielhaft dargestellt im Kontext einer konkreten Ausgestaltung eines Parksicherheitsventils und dessen Funktion innerhalb einer Ventilanordnung wie beispielsweise der in DE 10 2016 005 625 A1 offenbarten Ventilanordnung. Letztere ist auch beschreibbar als Ventilanordnung mit der Funktion eines Parklöseventils und Zusatzfunktionen.

Wie für die Darstellung des Fluidventils F gilt auch im Folgenden: Zur Erläuterung verwendete Richtungsangaben, wie "oben", "unten", "seitlich", oder Begriffe mit Richtungsangaben, wie "Bodenöffnung", "Bodenkragen" und andere, beziehen sich auf die Darstellung in den Figuren. Ein demgegenüber verdrehter Einbau des Parksicherheitsventils 216, 216a ist möglich. Die Richtungsangaben sind dann entsprechend anzupassen.

Eine Ventilanordnung 210 weist ein Parklöseventil 211 nach Art eines 5/3-WegeVentils mit Bedienungseinheit 212 und Anschlüssen P1, P2, P3, P4, P5 auf. Außerdem ist das Parklöseventil 211 mit einem Steueranschluss PS versehen, über den ein in einem Steuervolumen 213 angeordneter Steuerkolben 214 zum Verstellen des Parklöseventils 211 beaufschlagbar ist.

Bestandteil der Ventilanordnung 210 ist weiterhin ein Notbremsventil 215 mit Anschlüssen N1, N2, N3 und Steueranschluss NS, nach Art eines 3/2-WegeVentils.

Weiterhin Bestandteil der Ventilanordnung 210 ist ein Parksicherheitsventil 216 mit Anschlüssen 1-1_{S}, 2_{S}, 3_{S} und Steuereingängen 4_{Sa} und 4_{Sb}, nach Art eines 3/2-Wege-Ventils.

Weiterhin Bestandteil der Ventilanordnung 210 ist ein verstellbares Rückschlagventil 217 mit Anschlüssen VR1, VR2 und einem Steueranschluss VRS.

Schließlich ist Bestandteil der Ventilanordnung 210 noch ein einfaches Rückschlagventil 218 mit Anschlüssen ER1 und ER2.

Die Ventilanordnung 210 ist in die nicht näher gezeigte pneumatische Bremsanlage eines Anhängefahrzeugs eingebunden, ähnlich wie in der DE 10 2016 005 625 A1 dargestellt. In pneumatischen Schaltbildern sind Eingänge und Ausgänge pneumatischer Elemente üblicherweise mit genormten Bezeichnungen versehen. Dies ist auch in den Figuren so dargestellt. Die entsprechenden Anschlüsse der Ventilanordnung 210 lauten
- 1-1: Versorgungsanschluss,
- 1-2: Vorratsbehälteranschluss,
- 21: Bremsdruckanschluss,
- 22: Federspeicheranschluss,
- 3: Entlüftungsanschluss,
- 4: Steueranschluss
und sind zur Verdeutlichung jeweils mit einem Umkreis versehen.

Zusätzlich sind in den Figuren auch die Anschlüsse des Parksicherheitsventils 216 in Anlehnung an die genormten Bezeichnungen beziffert, nämlich
- Anschluss 1-1_{S}: Druckeingang,
- Anschluss 2_{S}: Druckausgang,
- Anschluss 3_{S}: Entlastungsausgang,
- Anschluss 4_{Sa}: Steueranschluss,
- Anschluss 4_{Sb}: Steueranschluss.

Zur Verdeutlichung sind auch diese Anschlussbezeichnungen jeweils mit einem Umkreis versehen.

Die Verschaltung der Ventile 211, 215, 216, 217 und 218 mit den genannten Anschlüssen ist Fig. 4 entnehmbar. Von besonderer Bedeutung ist die Verschaltung des Parksicherheitsventils 16 mit den übrigen Ventilen 211, 215, 217, 218.

Der Anschluss 1-1_{S} ist als Druckeingang mit dem Versorgungsanschluss 1-1 verbunden. Der Anschluss 2_{S} ist als Druckausgang über einen Knoten 219 einerseits mit dem Steueranschluss 4_{Sb} und andererseits mit dem Anschluss P1 des Parklöseventils 211 verbunden. In der gezeigten Fahrstellung des Parklöseventils 211 besteht eine Verbindung vom Anschluss P1 zum Anschluss P4 und von dort zum Steueranschluss NS des Notbremsventils 215.

Der Steueranschluss 4_{Sa} ist über einen Knoten 220 mit dem Steueranschluss 4 der Ventilanordnung 210 und dem Anschluss N1 des Notbremsventils 215 verbunden. In der in Fig. 4 gezeigten Fahrstellung liegt am Versorgungsanschluss 1-1 und am Vorratsbehälteranschluss 1-2 ausreichend Druck an, sodass im Steuervolumen 213 Druck anliegt und das Parklöseventil 211 nicht in eine Lösestellung fallen kann. Außerdem ist der Steueranschluss VRS mit Druck beaufschlagt, sodass das verstellbare Rückschlagventil 217 in der gezeigten Rückschlagstellung steht.

Das Parksicherheitsventil 216 in Fig. 4 weist eine Haltefunktion auf. Gezeigt ist eine Sperrstellung. Das heißt, es besteht kein Durchgang vom Druckeingang 1-1_{S} zum Druckausgang 2_{S}. Das Parksicherheitsventil 216 schaltet in die nicht gezeigte Durchlassstellung, wenn über den Steueranschluss 4 und den damit verbundenen Steueranschluss 4_{Sa} ein Druck oberhalb eines Grenzwerts eingespeist wird, der die Wirkung einer Rückstellfeder 221 überwindet. Anschließend ist der Druckeingang 1-1_{S} mit dem Druckausgang 2_{S} verbunden. Solange am mit dem Versorgungsanschluss 1-1 verbundenen Druckeingang 1-1_{S} und damit auch am Druckausgang 2_{S} ausreichend Druck oberhalb eines zweiten Grenzwerts anliegt, ist die Haltefunktion aktiv und das Parksicherheitsventil 216 bleibt in Durchlassstellung.

Das Parksicherheitsventil 216 wird dazu genutzt, den Anschluss P1 des Parklöseventils 211 in der gezeigten Fahrstellung nur dann mit Vorratsdruck über den Versorgungsanschluss 1-1 zu versorgen, wenn nach einem Druckverlust - etwa durch Abkoppeln eines Anhängefahrzeugs vom Zugfahrzeug - wenigstens einmal über den Steueranschluss 4 Bremsdruck eingespeist wurde.

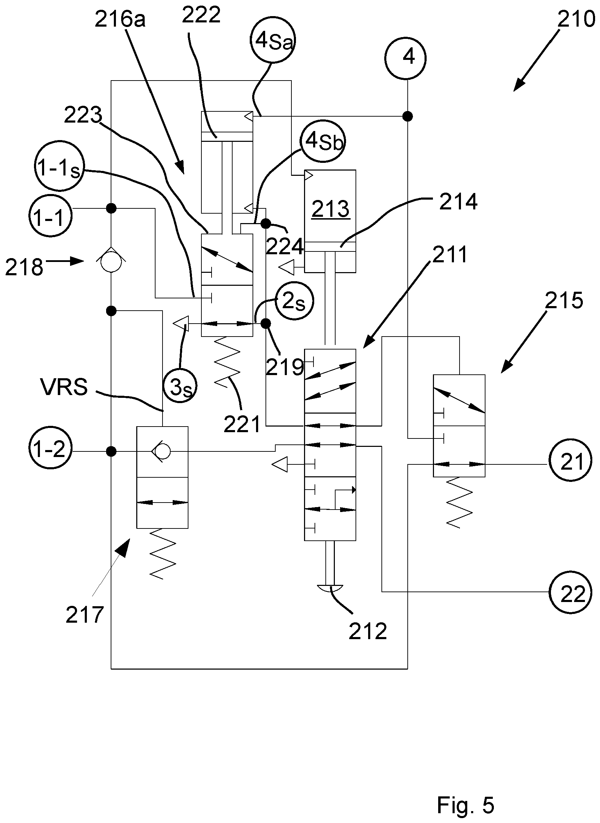

Die Fig. 5 bis 7 zeigen das pneumatische Schaltbild aus Fig. 4 mit leicht abgewandeltem Parksicherheitsventil 216a, nämlich mit einem Steuerkolben 222 und in drei verschiedenen Schaltstellungen. Druck am Steueranschluss 4_{Sa} wirkt direkt auf den Steuerkolben 222.

In der ersten Schaltstellung gemäß Fig. 5 befindet sich das Parksicherheitsventil 216a in Sperrstellung, wie das Parksicherheitsventil 216 in Fig. 4. Am Steueranschluss 4_{Sa} liegt kein Druck an, auch nicht am weiteren Steueranschluss 4_{Sb}. Es wird davon ausgegangen, dass am Versorgungsanschluss 1-1 Vorratsdruck anliegt, ebenso am Druckeingang 1-1_{S}, beispielsweise bei bestehender Verbindung vom Anhängefahrzeug zum Zugfahrzeug und ausreichendem Vorratsdruck im Zugfahrzeug. Das Parklöseventil 211 befindet sich in Fahrstellung. Das Notbremsventil 215 erhält keinen Steuerdruck.

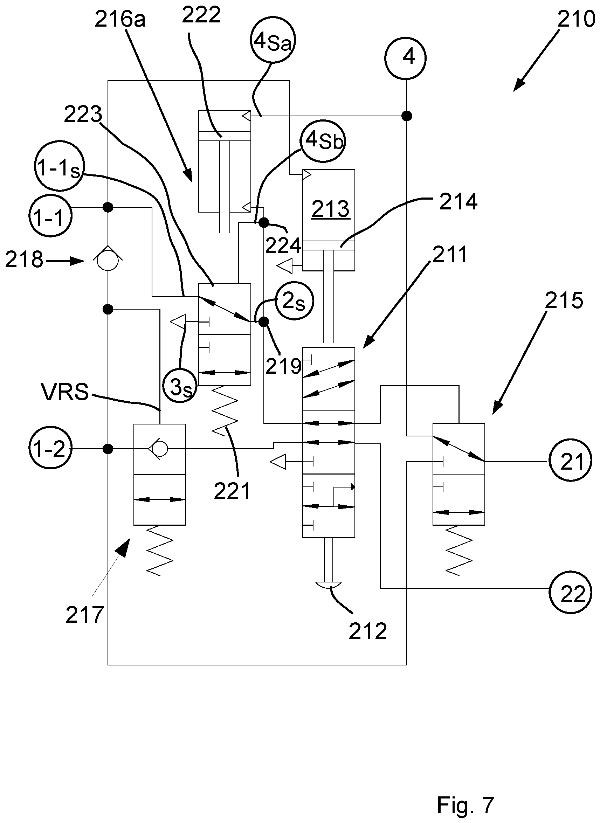

Bei ausreichend Druck am Steueranschluss 4_{Sa} schaltet der Steuerkolben 222 ein Schaltelement 223 gegen den Druck der Rückstellfeder 221 in die Durchlassstellung gemäß Fig. 6. Da der zweite Steueranschluss 4_{Sb} über den Knoten 219 und einen weiteren Knoten 224 mit dem Druckausgang 2_{S} verbunden ist, bleibt das Schaltelement 223 in Durchgangsstellung, auch wenn am Steueranschluss 4_{Sa} kein Druck mehr anliegt, siehe Fig. 7. Außerdem ist dort der Steuerkolben 222 durch den Druck am Steueranschluss 4_{Sb} zurückbewegt in die Stellung gemäß Fig. 5.

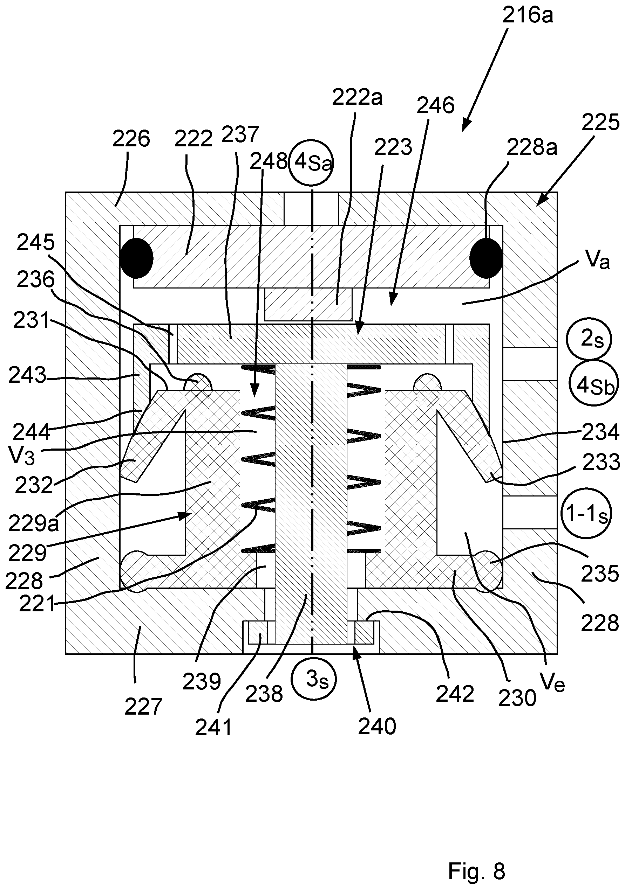

Ein Ausführungsbeispiel für das Parksicherheitsventil 216a ist im Axialschnitt in den Fig. 8 bis 10 dargestellt, passend zu den Fig. 5 bis 7 und analog zu den Fig. 1 bis 3. Das Parksicherheitsventil 216a entspricht in Aufbau und Funktion dem Fluidventil F, abgesehen vom Steueranschluss 4_{Sb}. Alle im Zusammenhang mit dem Fluidventil F erwähnten Merkmale und Funktionen können auch für das Parksicherheitsventil 216a vorgesehen sein.

In einem zylindrischen Gehäuse 225 mit Oberwand 226, Bodenwand 227 und umlaufender Seitenwand 228 ist in einem oberen Bereich, unterhalb des Steueranschlusses 4_{Sa} der Steuerkolben 222 axial bewegbar und mit einer umlaufenden Dichtung 228a versehen.

Auf der Bodenwand 227 ist eine Lippendichtung 229 angeordnet, welche einen becherförmigen Lippenhalter 229a mit einer Becheröffnung 248 und einem bodenseitigen, radial gerichteten Bodenkragen 230 aufweist. Von einem oberen Rand 231 des Lippenhalters 229a erstreckt sich nach außen eine kragenartige Dichtlippe 232. Die Dichtlippe 232 ist schräg abwärts gerichtet und liegt in der in Fig. 8 gezeigten Sperrstellung und zugleich ersten Schaltstellung mit einem unteren Dichtrand 233 an einer Dichtfläche 234 des Gehäuses 225 an.

Der Bodenkragen 230 ist radial außen zusätzlich mit einer Dichtwulst 235 versehen, die innen an der Seitenwand 228 und/oder an der Bodenwand 227 anliegt. Auf dem oberen Rand 231 ist eine umlaufende Dichtwulst 236 vorgesehen.

Das Gehäuse 225 weist seitlich den Druckeingang 1-1_{S} und den Druckausgang 2_{S} auf. Die Dichtfläche 234 liegt zwischen Druckeingang 1-1_{S} und Druckausgang 2_{S}.

Zwischen Steuerkolben 222 und Lippendichtung 229 ist das hier T-förmig ausgebildete Schaltelement 223 angeordnet und weist ein Dach 237 mit darunter stehendem Stamm 238 auf. Der Stamm 238 erstreckt sich von oben in die Becheröffnung 248 hinein und durch eine Bodenöffnung 239 des Lippenhalters 229a und eine bodenseitige Öffnung 240 des Gehäuses 225 hindurch und ist mit einer unteren Verbreiterung 241 in der einen Absatz 242 aufweisenden Öffnung 240 gehalten.

Die Rückstellfeder 221 sitzt auf dem Stamm 238, drückt das Dach 237 mit dem Stamm 238 nach oben und stützt sich dabei in dem becherförmigen Lippenhalter 229a ab, sodass die Verbreiterung 241 am Absatz 242 anliegt, siehe Sperrstellung in Fig. 8. Dabei verschließt die Verbreiterung 241 die Öffnung 240 nicht vollständig, so dass ein Druckausgleich über die Öffnung 240 möglich bleibt.

Das Dach 237 ist radial außen mit einem abwärts gerichteten Kragen 243 versehen, dessen unterer Rand 244 die Dichtlippe 232 außen abstützt oder ohne Druck an dieser anliegt. Die Dichtwulst 236 weist einen Abstand zum Dach 237 auf. Im Dach 237 befinden sich Strömungskanäle 245, sodass ein Raum zwischen Dichtwulst 236 und Kragen 243 belüftbar ist.

Ein Innenraum 246 des Gehäuses 225 ist zumindest unterteilt in ein mit dem Druckeingang 1-1_{S} verbundenes Eingangsvolumen Vₑ, ein mit dem Druckausgang 2_{S} verbundenes Ausgangsvolumen Vₐ, ein über die Bodenöffnung 239 und die Öffnung 240 mit dem Entlastungsausgang 3_{S} verbundenes Entlastungsvolumen V₃ und ein mit dem Steueranschluss 4_{Sa} verbundenes Steuervolumen V_{S}. Der Entlastungsausgang 3_{S} hat insbesondere die Funktion einer Entlüftung.

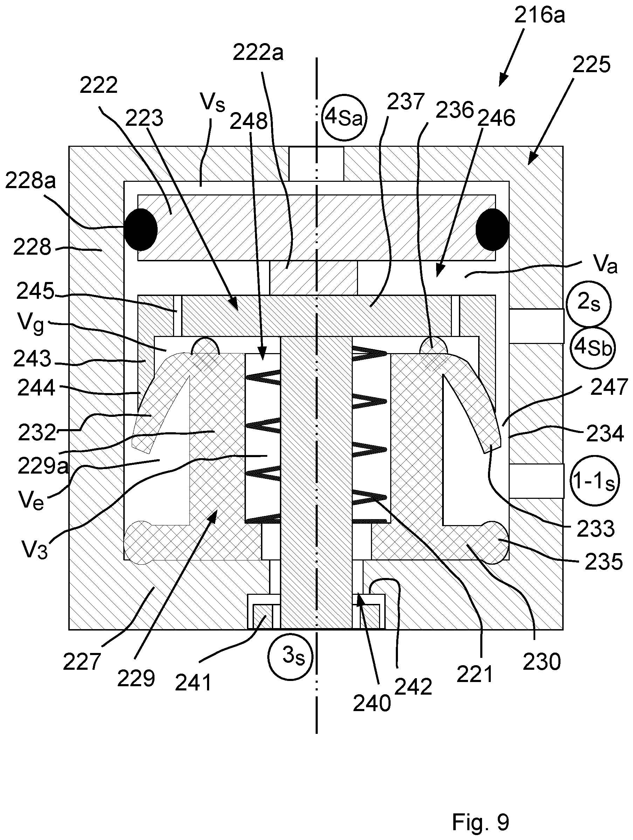

Fig. 9 zeigt das Parksicherheitsventil 216a in einer zweiten Schaltstellung, wie auch in Fig. 6 dargestellt. Über den Steueranschluss 4_{Sa} wirkt Steuerdruck im Steuervolumen V_{S} und auf den Steuerkolben 222, sodass letzterer mit einem unteren Fortsatz 222a das Schaltelement 223 durch Druck auf das Dach 237 beaufschlagt und abwärts drückt, gegen den Widerstand der Rückstellfeder 221. Dabei drückt der Kragen 243 die Dichtlippe 232 abwärts in eine Durchlassstellung. Der untere Dichtrand 233 löst sich von der Dichtfläche 234 und es entsteht ein Durchlass 247 vom Druckeingang 1-1_{S} zum Druckausgang 2_{S}, so dass jeweils der gleiche Druck anliegt. Zugleich kommt das Dach 237 zur Anlage an der Dichtwulst 236. Ein Druckausgleich innerhalb eines dadurch gebildeten gefangenen Volumens V_{g} zwischen der Dichtwulst 236, dem Kragen 243 und der Dichtlippe 232 radial außerhalb der Dichtwulst 236 ist möglich durch die Strömungskanäle 245.

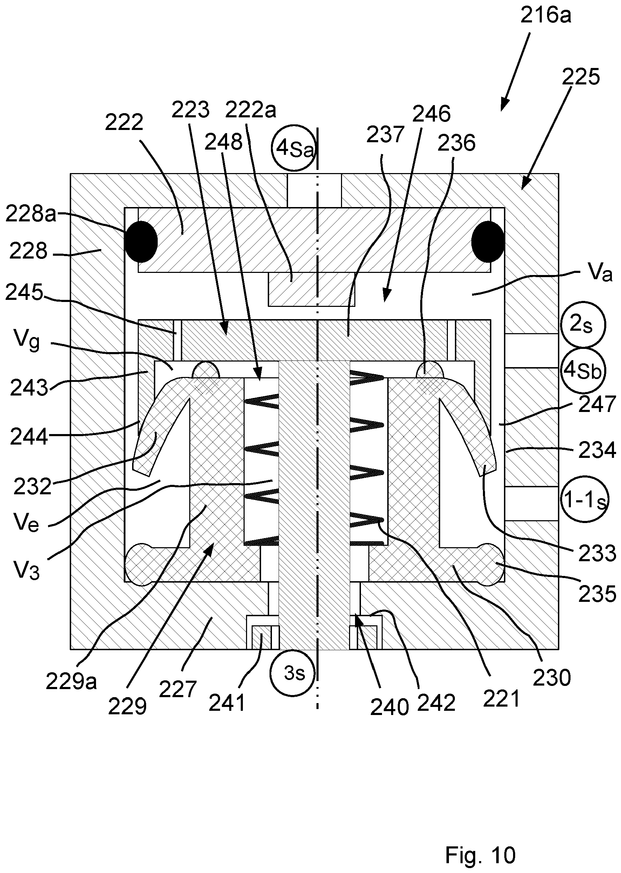

Ausgehend von der Schaltstellung in Fig. 9 wird anschließend über den Steueranschluss 4_{Sa} kein Steuerdruck mehr zugeführt. Es kommt zu der in Fig. 10 gezeigten dritten Schaltstellung. Durch den im Ausgangsvolumen Vₐ vorherrschenden Druck wirkt auch eine Kraft auf das Schaltelement 223 in Abwärtsrichtung, sodass die Dichtlippe 232 in Durchlassstellung bleibt und der Durchlass 247 offengehalten wird. Außerdem wird der Steuerkolben 222 aufwärts gedrückt in Richtung auf den Steueranschluss 4_{Sa} und in eine Position wie in Fig. 8 dargestellt.

Zusammengefasst sind folgende Zustände in den Fig. 8 bis 10 gezeigt:
- in Fig. 8: Sperrstellung von Dichtlippe 232 und Schaltelement 223 und Ausgangsstellung des Steuerkolbens 222,
- in Fig. 9: Durchlassstellung von Dichtlippe 232 und Schaltelement 223 und Betätigungsstellung des Steuerkolbens 222 bei Druck am Steueranschluss 4_{Sa},
- in Fig. 10: Durchlassstellung von Dichtlippe 232 und Schaltelement 223 und Ausgangsstellung des Steuerkolbens 222 nach Druckrückgang am Steueranschluss 4_{Sa} aber ausreichendem Druck im Ausgangsvolumen Vₐ.

Der Druck am Steueranschluss 4_{Sa} in Fig. 9 und der ausreichende Druck im Ausgangsvolumen Vₐ liegt vorzugsweise zwischen 1 und 3,5 bar, insbesondere zwischen 2 und 3 bar.

Das anhand der Ausführungsbeispiele erläuterte Parksicherheitsventil 216, 216a, welches insbesondere für pneumatische Bremsanlagen in Anhängefahrzeugen vorgesehen ist, kann - wie beschrieben - auch für andere Anwendungen im Zusammenhang mit strömenden Medien eingesetzt werden. Im Gegensatz zu herkömmlichen Schieberventilen oder Sitzventilen sind die Reibungskräfte in dem dargestellten Parksicherheitsventil mit schaltbarer Lippendichtung relativ gering.

**Bezugszeichenliste**

| | | | |
|---|---|---|---|
| Anschlüsse der Ventilanordnung | | 129a | Lippenhalter |
| 1-1 | Versorgungsanschluss | 130 | Bodenkragen |
| 1-2 | Vorratsbehälteranschluss | 131 | oberer Rand |
| 21 | Bremsdruckanschluss | 132 | Dichtlippe |
| 22 | Federspeicheranschluss | 133 | unterer Rand |
| 3 | Entlüftung | 134 | Dichtfläche |
| 4 | Steueranschluss | 135 | Dichtwulst |
| | | 136 | Dichtwulst |
| Anschlüsse des Fluidventils | | 137 | Dach |
| 1-1_{F} | Druckeingang | 138 | Stamm |
| 2_{F} | Druckausgang | 139 | Bodenöffnung (Lippendichtung) |
| 3_{F} | Entlastungsausgang | 140 | Öffnung (Gehäuse) |
| 4_{F} | Steueranschluss | 141 | Verbreiterung |
| | | 142 | Absatz |
| Anschlüsse des Parksicherheitsventils | | 143 | Kragen |
| 1-1_{S} | Druckeingang | 144 | unterer Rand |
| 2_{S} | Druckausgang | 145 | Strömungskanäle |
| 3_{S} | Entlastungsausgang | 146 | Innenraum |
| 4_{Sa} | Steueranschluss | 147 | Durchlass |
| 4_{Sb} | Steueranschluss | 148 | Becheröffnung |
| 121 | Rückstellfeder | 210 | Ventilanordnung |
| 122 | Steuerkolben | 211 | Parklöseventil |
| 122a | Fortsatz | 212 | Bedienungseinheit |
| 123 | Schaltelement | 213 | Steuervolumen |
| 125 | Gehäuse | 214 | Steuerkolben |
| 126 | Oberwand | 215 | Notbremsventil |
| 127 | Bodenwand | 216 | Parksicherheitsventil |
| 128 | Seitenwand | 216a | Parksicherheitsventil |
| 128a | umlaufende Dichtung | 217 | verstellbares Rückschlagventil |
| 129 | Lippendichtung | 218 | einfaches Rückschlagventil |
| 219 | Knoten | 244 | unterer Rand |
| 220 | Knoten | 245 | Strömungskanäle |
| 221 | Rückstellfeder | 246 | Innenraum |
| 222 | Steuerkolben | 247 | Durchlass |
| 222a | Fortsatz | 248 | Becheröffnung |
| 223 | Schaltelement | | |
| 224 | Knoten | ER1 | Anschluss |
| 225 | Gehäuse | ER2 | Anschluss |
| 226 | Oberwand | F | Fluidventil |
| 227 | Bodenwand | N1 | Anschluss |
| 228 | Seitenwand | N2 | Anschluss |
| 228a | umlaufende Dichtung | N3 | Anschluss |
| 229 | Lippendichtung | NS | Steueranschluss |
| 229a | Lippenhalter | P1 | Anschluss |
| 230 | Bodenkragen | P2 | Anschluss |
| 231 | oberer Rand | P3 | Anschluss |
| 232 | Dichtlippe | P4 | Anschluss |
| 233 | unterer Dichtrand | P5 | Anschluss |
| 234 | Dichtfläche | PS | Steueranschluss |
| 235 | Dichtwulst | Vₐ | Ausgangsvolumen |
| 236 | Dichtwulst | Vₑ | Eingangsvolumen |
| 237 | Dach | V_{g} | gefangenes Volumen |
| 238 | Stamm | V_{S} | Steuervolumen |
| 239 | Bodenöffnung (Lippendichtung) | V₃ | Entlastungsvolumen |
| 240 | Öffnung (Gehäuse) | VR1 | Anschluss |
| 241 | Verbreiterung | VR2 | Anschluss |
| 242 | Absatz | VRS | Steueranschluss |
| 243 | Kragen | | |

## Patentansprüche

1. Fluidventil (F, 216, 216a) mit einer eine Dichtlippe (132, 232) aufweisenden Lippendichtung (129, 229) zwischen einem Druckeingang (1-1_{F}, 1-1s) und einem Druckausgang (2_{F}, 2s), wobei die Position der Dichtlippe (132, 232) zur Veränderung eines Durchlassquerschnitts (147, 247) veränderbar ist, **dadurch gekennzeichnet, dass** die Position der Dichtlippe (132, 232) durch Druck eines Schaltelements (123, 223) veränderbar ist und mit dem Schaltelement (123, 223) mittelbar der Durchlassquerschnitt (147, 247) verändert wird.

2. Fluidventil nach Anspruch 1, **dadurch gekennzeichnet, dass** die Dichtlippe (132, 232) in einer Sperrstellung an einer Dichtfläche (134, 234) anliegt und so den Durchlassquerschnitt (147, 247) verschließt und dass die Dichtlippe (132, 232) in einer Durchlassstellung einen Abstand zu der Dichtfläche (134, 234) aufweist.

3. Fluidventil nach Anspruch 1 oder 2, **dadurch gekennzeichnet, dass** die Dichtlippe (132, 232) eine Eigenspannung aufweist, welche die Dichtlippe (132, 232) zur Verringerung des Durchlassquerschnitts (147, 247) beaufschlagt.

4. Fluidventil nach einem der vorhergehenden Ansprüche, **dadurch gekennzeichnet, dass** die Dichtlippe (132, 232) in einer Sperrstellung an dem Schaltelement (123, 223) abgestützt ist.

5. Fluidventil nach einem der vorhergehenden Ansprüche, **dadurch gekennzeichnet, dass** das Schaltelement (123, 223) an der Dichtlippe (132, 232) anliegt und dass die Dichtlippe (132, 232) durch das Schaltelement (123, 223) zur Vergrößerung des Durchlassquerschnitts (147, 247) beaufschlagbar ist.

6. Fluidventil nach einem der vorhergehenden Ansprüche, **dadurch gekennzeichnet, dass** die Lippendichtung (129, 229) einen Lippenhalter (129a, 229a) aufweist, an dem die Dichtlippe (132, 232) gehalten ist, und dass ein Winkel der Dichtlippe (132, 232) zu dem Lippenhalter (129a, 229a) durch Druck des Schaltelements (123, 223) änderbar ist.

7. Fluidventil nach Anspruch 6, **dadurch gekennzeichnet, dass** das Schaltelement (123, 223) pilzförmig mit Stamm (138, 238) und Dach (137, 237) ausgebildet ist und dass der Lippenhalter (129a, 229a) becherförmig mit einer Becheröffnung (148, 248) und einem Boden (130, 230) ausgebildet ist, wobei der Boden (130, 230) eine Bodenöffnung (139, 239) aufweist und der Stamm (138, 238) in die Becheröffnung (148, 248) hineinreicht bis in die Bodenöffnung (139, 239), und wobei das Dach (137, 237) in der oder einer Durchlassstellung an der Lippendichtung (129, 229) anliegt.

8. Fluidventil nach Anspruch 7, **dadurch gekennzeichnet, dass** das Dach (137, 237) einen umlaufenden Kragen (143, 243) aufweist, welcher zum Boden (130, 230) des Lippenhalters (129a, 229a) geneigt ist, dass sich die Dichtlippe (132, 232) von einem Rand (131, 231) neben der Becheröffnung (148, 248) umlaufend nach außen erstreckt, und dass die Dichtlippe (132, 232) in der Durchlassstellung vom Kragen (143, 243) beaufschlagt wird.

9. Fluidventil nach einem der vorhergehenden Ansprüche, **dadurch gekennzeichnet, dass** das Schaltelement (123, 223) in Richtung auf eine Entlastung der Dichtlippe (132, 232) durch eine Rückstellfeder (121, 221) beaufschlagt ist.

10. Fluidventil nach Anspruch 9, **dadurch gekennzeichnet, dass** das Schaltelement (123, 223) in einem Gehäuse (125, 225) gegen die Wirkung der Rückstellfeder (121, 221) bewegbar ist, und dass eine Verbreiterung (141, 241) des Schaltelements (123, 223) bei minimiertem Durchlassquerschnitt (147, 247) durch die Wirkung der Rückstellfeder (121, 221) an einem Absatz (142, 242) des Gehäuses (125, 225) anliegt.

11. Fluidventil nach einem der Ansprüche 1 bis 10, **dadurch gekennzeichnet, dass** die Dichtlippe (132, 232) an einem oder dem Lippenhalter (129a, 229a) gehalten ist, wobei der Lippenhalter (129a, 229a) in einem Gehäuse (125, 225) feststehend angeordnet ist.

12. Fluidventil nach einem der vorhergehenden Ansprüche, **dadurch gekennzeichnet, dass** ein oder das Gehäuse (125, 225) einen zylindrischen Innenraum (146, 246) aufweist, in dem das Schaltelement (123, 223) in Axialrichtung bewegbar und die Lippendichtung (129, 229) gehalten ist.

13. Fluidventil nach Anspruch 12, **dadurch gekennzeichnet, dass** die Dichtlippe (132, 232) bei geschlossenem Durchlassquerschnitt (147, 247) den Innenraum (146, 246) aufteilt in ein mit dem Druckausgang (2_{F}, 2s) verbundenes Ausgangsvolumen (Vₐ) und ein mit dem Druckeingang (1-1_{F}, 1-1s) verbundenes Eingangsvolumen (Vₑ).

14. Fluidventil nach Anspruch 13, **dadurch gekennzeichnet, dass** zwischen der Lippendichtung (129, 229) und dem Schaltelement (123, 223) ein mit einem Entlastungsausgang (3_{F}, 3s) verbundenes Entlastungsvolumen (Vs) gebildet ist, und dass das Entlastungsvolumen (Vs) und das Ausgangsvolumen (Vₐ) über einen Strömungskanal (145, 245) im Schaltelement (123, 223) zumindest in der oder einer Sperrstellung der Dichtlippe (132, 232) miteinander verbunden sind.

15. Fluidventil nach Anspruch 14, **dadurch gekennzeichnet, dass** eine Verbindung vom Entlastungsvolumen (Vs) zum Strömungskanal (145, 245) in der oder einer Durchlassstellung der Dichtlippe (132, 232) verschlossen ist durch eine Dichtung (136, 236) zwischen der Lippendichtung (129, 229) und dem Schaltelement (123, 223).

16. Fluidventil nach einem der Ansprüche 1 bis 15, **gekennzeichnet durch** einen in dem oder einem Gehäuse (125, 225) zwischen einer Ausgangsstellung und einer Betätigungsstellung bewegbaren Steuerkolben (122, 222), welcher durch Druck an einem Steueranschluss (4_{F}, 4_{Sa}) aus der Ausgangsstellung bewegbar ist und in der Betätigungsstellung das oder ein Schaltelement (123, 223) zur Betätigung der Dichtlippe (132, 232) beaufschlagt.

17. Fluidventil nach Anspruch 16, **dadurch gekennzeichnet, dass** der Steuerkolben (222) ein mit dem Steueranschluss (4_{F}, 4_{Sa}) verbundenes Steuervolumen (Vs) von dem oder einem mit dem Druckausgang (2_{F}, 2s) verbundenen Ausgangsvolumen (Vₐ) trennt.

18. Fluidventil nach einem der Ansprüche 1 bis 17, **gekennzeichnet durch** wenigstens zwei Schaltstellungen, nämlich eine Sperrstellung und die oder eine Durchlassstellung, und mit wenigstens vier Anschlüssen, nämlich dem Druckeingang (1-1_{F}, 1-1s), dem Druckausgang (2_{F}, 2s), einem Entlastungsausgang (3_{F}, 3s) und dem oder einem Steueranschluss (4_{F}, 4sa), mit dem oder einem in dem oder einem Gehäuse (125, 225) bewegbaren Schaltelement (123, 223) zum wahlweisen Öffnen oder Schließen des Durchlassquerschnitts (147, 247) vom Druckeingang (1-1_{F}, 1-1_{S}) zum Druckausgang (2_{F}, 2s) in Abhängigkeit von einem Druck an dem Druckausgang (2_{F}, 2s) und einem Druck an dem Steueranschluss (4_{F}, 4sa), und mit einer Haltefunktion des Schaltelements (123, 223), derart, dass der Durchlassquerschnitt (147, 247) bei Anliegen eines Drucks am Steueranschluss (4_{F}, 4_{Sa}), der oberhalb eines ersten Grenzwerts liegt, geöffnet ist und auch dann geöffnet bleibt, wenn der Druck an dem Steueranschluss (4_{F}, 4sa) wieder unter den ersten Grenzwert fällt, dabei aber an dem Druckausgang (2_{F}, 2s) ein Druck oberhalb eines zweiten Grenzwerts anliegt.

19. Pneumatische Ventilanordnung (210) mit einem Parklöseventil (211) und einem Fluidventil (F, 216, 216a) nach einem der Ansprüche 1 bis 18.

20. Pneumatische Ventilanordnung (210) nach Anspruch 19, **dadurch gekennzeichnet, dass** der Druckeingang (1-1_{F}, 1-1s) des Fluidventils (F, 216, 216a) mit einem unter einem Vorratsdruck stehenden Versorgungsanschluss (1-1) der Ventilanordnung (210) verbunden ist, dass der Druckausgang (2_{F}, 2s) des Fluidventils (F, 216, 216a) mit einem Anschluss (P1) des Parklöseventils (211) verbunden ist, und der oder ein Steueranschluss (4_{F}, 4_{Sa}) des Fluidventils (F, 216, 216a) mit einem Steueranschluss (4) der Ventilanordnung (210) verbunden ist.

21. Pneumatische Bremsanlage für ein Fahrzeug, insbesondere für ein Anhängefahrzeug, mit einem Fluidventil (F, 216, 216a) nach einem der Ansprüche 1 bis 18 oder mit einer Ventilanordnung (210) nach einem der Ansprüche 19 und 20.

## Claims

1. Fluid valve (F, 216, 216a) comprising a lip seal (129, 229) between a pressure input (1-1_{F}, 1-1s) and a pressure output (2_{F}, 2s), which seal has a sealing lip (132, 232), it being possible for the position of the sealing lip (132, 232) to be changed so as to change a passage cross-section (147, 247), **characterized in that the** position of the sealing lip (132, 232) can be changed by the pressure of a switching element (123, 223), and the passage cross-section (147, 247) is indirectly changed by means of the switching element (123, 223).

2. Fluid valve according to claim 1, **characterized in that** the sealing lip (132, 232) rests against a sealing surface (134, 234) in a locking position and thus closes the passage cross-section (147, 247), **and in that** the sealing lip (132, 232) has a distance from the sealing surface (134, 234) in a passage position.

3. Fluid valve according to either claim 1 or claim 2, **characterized in that** the sealing lip (132, 232) has a residual stress which the sealing lip (132, 232) applies so as to reduce the passage cross-section (147, 247).

4. Fluid valve according to any of the preceding claims,
**characterized in that** the sealing lip (132, 232) is supported on the switching element (123, 223) in a locking position.

5. Fluid valve according to any of the preceding claims, **characterized in that** the switching element (123, 223) rests against the sealing lip (132, 232) **and in that** the sealing lip (132, 232) can be acted upon by the switching element (123, 223) so as to enlarge the passage cross-section (147, 247).

6. Fluid valve according to any of the preceding claims,
**characterized in that** the lip seal (129, 229) has a lip holder (129a, 229a) on which the sealing lip (132, 232) is held, **and in that** an angle of the sealing lip (132, 232) with respect to the lip holder (129a, 229a) can be changed by pressure of the switching element (123, 223).

7. Fluid valve according to claim 6, **characterized in that** the switching element (123, 223) is mushroom-shaped with a stem (138, 238) and roof (137, 237) and **in that** the lip holder (129a, 229a) is designed to be cup-shaped with a cup opening (148, 248) and a bottom (130, 230), the bottom (130, 230) having a bottom opening (139, 239) and the stem (138, 238) extending into the cup opening (148, 248) up to the bottom opening (139, 239), and the roof (137, 237) resting against the lip seal (129, 229) in the passage position or a passage position.

8. Fluid valve according to claim 7, **characterized in that** the roof (137, 237) has a peripheral collar (143, 243) which is inclined toward the bottom (130, 230) of the lip holder (129a, 229a) such that the sealing lip (132, 232) extends outward from an edge (131, 231) next to the cup opening (148, 248), **and in that** the sealing lip (132, 232) is acted upon by the collar (143, 243) in the passage position.

9. Fluid valve according to any of the preceding claims, **characterized in that** the switching element (123, 223) is acted upon by a restoring spring (121, 221) in a direction toward a relief of the sealing lip (132, 232).

10. Fluid valve according to claim 9, **characterized in that** the switching element (123, 223) can be moved in a housing (125, 225) against the effect of the restoring spring (121, 221), **and in that** a widening (141, 241) of the switching element (123, 223) rests against a shoulder (142, 242) of the housing (125, 225) when the passage cross-section (147, 247) is minimized by the effect of the restoring spring (121, 221).

11. Fluid valve according to any of claims 1 to 10, **characterized in that** the sealing lip (132, 232) is held on a lip holder or the lip holder (129a, 229a), the lip holder (129a, 229a) being fixedly arranged in a housing (125, 225).

12. Fluid valve according to any of the preceding claims,
**characterized in that** a housing or the housing (125, 225) has a cylindrical interior (146, 246) in which the switching element (123, 223) can be moved in the axial direction and the lip seal (129, 229) is held.

13. Fluid valve according to claim 12, **characterized in that,** when the passage cross-section (147, 247) is closed, the sealing lip (132, 232) divides the interior (146, 246) into an output volume (Vₐ) connected to the pressure output (2_{F}, 2s) and an input volume (Vₑ) connected to the pressure input (1-1_{F}, 1-1_{S}).

14. Fluid valve according to claim 13, **characterized in that** between the lip seal (129, 229) and the switching element (123, 223), a relief volume (V₃) connected to a relief output (3_{F}, 3s) is formed, **and in that** the relief volume (V₃) and the output volume (Vₐ) are connected to one another via a flow channel (145, 245) in the switching element (123, 223) at least in the locking position or a locking position of the sealing lip (132, 232).

15. Fluid valve according to claim 14, **characterized in that** a connection from the relief volume (V₃) to the flow channel (145, 245) in the passage position or a passage position of the sealing lip (132, 232) is closed by a seal (136, 236) between the lip seal (129, 229) and the switching element (123, 223).

16. Fluid valve according to any of claims 1 to 15, **characterized by** a control piston (122, 222) which can be moved in the housing or a housing (125, 225) between a starting position and an actuating position and which, by pressure on a control terminal (4_{F}, 4_{Sa}), can be moved out of the starting position and, in the actuating position, acts upon the switching element or a switching element (123, 223) for actuating the sealing lip (132, 232).

17. Fluid valve according to claim 16, **characterized in that** the control piston (222) separates a control volume (Vs) connected to the control terminal (4_{F}, 4sa) from the output volume or an output volume (Vₐ) connected to the pressure output (2_{F}, 2s).

18. Fluid valve according to any of claims 1 to 17, **characterized by** at least two switching positions, namely a locking position and the passage position or a passage position, and comprising at least four terminals, namely the pressure input (1-1_{F}, 1-1s), the pressure output (2_{F}, 2s), a relief output (3_{F}, 3s) and the control terminal or a control terminal (4_{F}, 4sa), comprising the switching element or a switching element (123, 223), which is movable in the housing or a housing (125, 225), for optionally opening or closing the passage cross-section (147, 247) from the pressure input (1-1_{F}, 1-1s) to the pressure output (2_{F}, 2s) on the basis of a pressure at the pressure output (2_{F}, 2s) and a pressure at the control terminal (4_{F}, 4_{Sa}), and having a holding function of the switching element (123, 223), such that, if a pressure is applied at the control terminal (4_{F}, 4sa), which is above a first limit value, the passage cross-section (147, 247) is open and remains open even if the pressure at the control terminal (4_{F}, 4_{Sa}) again falls below the first limit value, but at the same time there is a pressure above a second limit value at the pressure output (2_{F}, 2s).

19. Pneumatic valve assembly (210) comprising a park release valve (211) and a fluid valve (F, 216, 216a) according to any of claims 1 to 18.

20. Pneumatic valve assembly (210) according to claim 19, **characterized in that** the pressure input (1-1_{F}, 1-1s) of the fluid valve (F, 216, 216a) is connected to a supply terminal (1-1) of the valve assembly (210), which terminal is under a supply pressure, **in that** the pressure output (2_{F}, 2s) of the fluid valve (F, 216, 216a) is connected to a terminal (P1) of the park release valve (211), and the control terminal or a control terminal (4_{F}, 4_{Sa}) of the fluid valve (F, 216, 216a) is connected to a control terminal (4) of the valve assembly (210).

21. Pneumatic brake system for a vehicle, in particular for a trailer vehicle, comprising a fluid valve (F, 216, 216a) according to any of claims 1 to 18 or comprising a valve assembly (210) according to any of claims 19 and 20.

## Revendications

1. Soupape pour fluide (F, 216, 216a) comportant un joint à lèvre (129, 229) présentant une lèvre d'étanchéité (132, 232) entre une entrée de pression (1-1_{F}, 1-1s) et une sortie de pression (2_{F}, 2s), dans laquelle la position de la lèvre d'étanchéité (132, 232) peut être modifiée pour la modification d'une section transversale de passage (147, 247), **caractérisée en ce que** la position de la lèvre d'étanchéité (132, 232) peut être modifiée par la pression d'un élément de commutation (123, 223) et la section transversale de passage (147, 247) est modifiée indirectement par l'élément de commutation (123, 223).

2. Soupape pour fluide selon la revendication 1, **caractérisée en ce que** la lèvre d'étanchéité (132, 232) repose contre une surface d'étanchéité (134, 234) dans une position de blocage et ferme ainsi la section transversale de passage (147, 247) **et en ce que,** dans une position de passage, la lèvre d'étanchéité (132, 232) présente une distance par rapport à la surface d'étanchéité (134, 234).

3. Soupape pour fluide selon la revendication 1 ou 2,
**caractérisée en ce que** la lèvre d'étanchéité (132, 232) présente une contrainte résiduelle qui sollicite la lèvre d'étanchéité (132, 232) pour la réduction de la section transversale de passage (147, 247).

4. Soupape pour fluide selon l'une des revendications précédentes,
**caractérisée en ce que** la lèvre d'étanchéité (132, 232) est appuyée sur l'élément de commutation (123, 223) dans une position de blocage.

5. Soupape pour fluide selon l'une des revendications précédentes, **caractérisée en ce que** l'élément de commutation (123, 223) repose contre la lèvre d'étanchéité (132, 232) **et en ce que** la lèvre d'étanchéité (132, 232) peut être sollicitée par l'élément de commutation (123, 223) pour l'augmentation de la section transversale de passage (147, 247).

6. Soupape pour fluide selon l'une des revendications précédentes, **caractérisée en ce que** le joint à lèvre (129, 229) présente un dispositif de maintien de lèvre (129a, 229a) sur lequel est maintenue la lèvre d'étanchéité (132, 232), **et en ce qu'**un angle de la lèvre d'étanchéité (132, 232) par rapport au dispositif de maintien de lèvre (129a, 229a) peut être modifié par la pression de l'élément de commutation (123, 223).

7. Soupape pour fluide selon la revendication 6, **caractérisée en ce que** l'élément de commutation (123, 223) est en forme de champignon avec un tronc (138, 238) et une partie supérieure (137, 237) **et en ce que** le dispositif de maintien de lèvre (129a, 229a) est en forme de gobelet avec une ouverture de gobelet (148, 248) et un fond (130, 230), dans laquelle le fond (130, 230) présente une ouverture de fond (139, 239) et le tronc (138, 238) pénètre dans l'ouverture de gobelet (148, 248) jusque dans l'ouverture de fond (139, 239), et dans laquelle la partie supérieure (137, 237) repose contre le joint à lèvre (129, 229) dans la position de passage ou une position de passage.

8. Soupape pour fluide selon la revendication 7, **caractérisée en ce que** la partie supérieure (137, 237) présente une collerette (143, 243) circonférentielle inclinée par rapport au fond (130, 230) du dispositif de maintien de lèvre (129a, 229a), **en ce que** la lèvre d'étanchéité (132, 232) s'étend de manière circonférentielle vers l'extérieur depuis un bord (131, 231) à côté de l'ouverture de gobelet (148, 248), **et en ce que** la lèvre d'étanchéité (132, 232) est sollicitée par la collerette (143, 243) dans la position de passage.

9. Soupape pour fluide selon l'une des revendications précédentes, **caractérisée en ce que** l'élément de commutation (123, 223) est sollicité en direction d'une décharge de la lèvre d'étanchéité (132, 232) par un ressort de rappel (121, 221).

10. Soupape pour fluide selon la revendication 9, **caractérisée en ce que** l'élément de commutation (123, 223) peut être déplacé dans un boîtier (125, 225) à l'encontre de l'action du ressort de rappel (121, 221), **et en ce qu'**un élargissement (141, 241) de l'élément de commutation (123, 223) repose contre un épaulement (142, 242) du boîtier (125, 225) par l'action du ressort de rappel (121, 221) lorsque la section transversale de passage (147, 247) est minimisée.

11. Soupape pour fluide selon l'une des revendications 1 à 10,
**caractérisée en ce que** la lèvre d'étanchéité (132, 232) est maintenue sur un dispositif de maintien de lèvre ou le dispositif de maintien de lèvre (129a, 229a), dans laquelle le dispositif de maintien de lèvre (129a, 229a) est disposé de manière à être fixe dans un boîtier (125, 225).

12. Soupape pour fluide selon l'une des revendications précédentes, **caractérisée en ce qu'**un boîtier ou le boîtier (125, 225) présente un espace intérieur (146, 246) cylindrique dans lequel l'élément de commutation (123, 223) peut être déplacé dans la direction axiale et le joint à lèvre (129, 229) est maintenu.

13. Soupape pour fluide selon la revendication 12, **caractérisée en ce que,** lorsque la section transversale de passage (147, 247) est fermée, la lèvre d'étanchéité (132, 232) divise l'espace intérieur (146, 246) en un volume de sortie (Vₐ) relié à la sortie de pression (2_{F}, 2s) et en un volume d'entrée (Vₑ) relié à l'entrée de pression (1-1_{F}, 1-1s).

14. Soupape pour fluide selon la revendication 13, **caractérisée en ce qu'**un volume de décharge (V₃) relié à une sortie de décharge (3_{F}, 3s) est formé entre le joint à lèvre (129, 229) et l'élément de commutation (123, 223), **et en ce que** le volume de décharge (V₃) et le volume de sortie (Vₐ) sont reliés entre eux par l'intermédiaire d'un canal d'écoulement (145, 245) dans l'élément de commutation (123, 223), au moins dans la position de blocage ou une position de blocage de la lèvre d'étanchéité (132, 232).

15. Soupape pour fluide selon la revendication 14, **caractérisée en ce qu'**une liaison du volume de décharge (V₃) au canal d'écoulement (145, 245) est fermée, dans la position de passage ou une position de passage de la lèvre d'étanchéité (132, 232), par un joint (136, 236) entre le joint à lèvre (129, 229) et l'élément de commutation (123, 223).

16. Soupape pour fluide selon l'une des revendications 1 à 15,
**caractérisée par** un piston de commande (122, 222) pouvant être déplacé dans le boîtier ou un boîtier (125, 225) entre une position de départ et une position d'actionnement, lequel piston de commande peut être déplacé par une pression au niveau d'un raccord de commande (4_{F}, 4sa) à partir de la position de départ et sollicite, dans la position d'actionnement, l'élément de commutation ou un élément de commutation (123, 223) pour l'actionnement de la lèvre d'étanchéité (132, 232).

17. Soupape pour fluide selon la revendication 16, **caractérisée en ce que** le piston de commande (222) sépare un volume de commande (Vs) relié au raccord de commande (4_{F}, 4_{Sa}) du volume de sortie ou d'un volume de sortie (Vₐ) relié à la sortie de pression (2_{F}, 2s).

18. Soupape pour fluide selon l'une des revendications 1 à 17,
**caractérisée par** au moins deux positions de commutation, à savoir une position de blocage et la position de passage ou une position de passage, et comportant au moins quatre raccords, à savoir l'entrée de pression (1-1_{F}, 1-1s), la sortie de pression (2_{F}, 2s), une sortie de décharge (3_{F}, 3s) et le raccord de commande ou un raccord de commande (4_{F}, 4_{Sa}), comportant l'élément de commutation ou un élément de commutation (123, 223) pouvant être déplacé dans le boîtier ou un boîtier (125, 225) pour l'ouverture ou la fermeture de manière sélective de la section transversale de passage (147, 247) de l'entrée de pression (1-1_{F}, 1-1_{S}) jusqu'à la sortie de pression (2_{F}, 2s) en fonction d'une pression au niveau de la sortie de pression (2_{F}, 2s) et d'une pression au niveau du raccord de commande (4_{F}, 4_{Sa}), et comportant une fonction de maintien de l'élément de commutation (123, 223), de telle sorte que, en cas de présence d'une pression au niveau du raccord de commande (4_{F}, 4_{Sa}) supérieure à une première valeur limite, la section transversale de passage (147, 247) est ouverte et reste ouverte même si la pression au niveau du raccord de commande (4_{F}, 4sa) tombe en dessous de la première valeur limite, mais qu'une pression supérieure à une seconde valeur limite est présente au niveau de la sortie de pression (2_{F}, 2s).

19. Agencement de soupapes (210) pneumatique comportant une soupape de desserrage de stationnement (211) et une soupape pour fluide (F, 216, 216a) selon l'une des revendications 1 à 18.

20. Agencement de soupapes (210) pneumatique selon la revendication 19, **caractérisé en ce que** l'entrée de pression (1-1_{F}, 1-1s) de la soupape pour fluide (F, 216, 216a) est reliée à un raccord d'alimentation (1-1) de l'agencement de soupapes (210) soumis à une pression de réserve, **en ce que** la sortie de pression (2_{F}, 2s) de la soupape pour fluide (F, 216, 216a) est reliée à un raccord (P1) de la soupape de desserrage de stationnement (211), et le raccord de commande ou un raccord de commande (4_{F}, 4sa) de la soupape pour fluide (F, 216, 216a) est relié à un raccord de commande (4) de l'agencement de soupapes (210).

21. Système de freinage pneumatique pour un véhicule, en particulier pour un véhicule tracté, comportant une soupape pour fluide (F, 216, 216a) selon l'une des revendications 1 à 18 ou comportant un agencement de soupapes (210) selon l'une des revendications 19 et 20.
